# EUROPEAN PATENT APPLICATION

(11) **EP 3 862 444 A1**
(43) Date of publication of application: **11.08.2021**
(21) Application number: 21153526.5
(22) Date of filing: 26.01.2021
(51) Int. Cl.: C14B 1/56, B32B 9/02, B32B 37/00, C14B 7/02, D06N 3/00, B32B 29/00

(54) **EMBOSSED LAMINAR ELEMENT FOR FINISHING TREATMENTS FOR A PRODUCT AND METHOD USING SAID EMBOSSED LAMINAR ELEMENT TO MAKE SAID PRODUCT**

(30) Priority: 04.02.2020 IT 202000002113
(71) Applicant: AGOSTI TECH S.R.L., 36070 Trissino (VI) (IT)
(72) Inventor: AGOSTI, Giacomino Adolfo, 36070 Castelgomberto (VI) (IT)
(74) Representative: Ziliotto, Tiziano

(57) **Abstract**

The present invention concerns an embossed laminar element (50) suited to be used in treatments designed to finish a surface (M) of a product (1), more specifically a surface of a hide. The laminar element (50) comprises a supporting layer (52) comprising a first embossed surface (54) that reproduces the surface characteristics corresponding to the surface characteristics desired for the surface to be finished, and a second surface (56) opposite the first embossed surface (54). A material with elastic properties (58) is associated with the second surface (56) of the supporting layer (52).

## Description

### TECHNICAL FIELD OF THE INVENTION

The invention concerns an embossed laminar element used in finishing treatments, in particular in treatments during which a product is finished by means of an upgrading layer, more specifically leather that is not of top quality is finished by means of an upgrading layer.

The invention also concerns a method using said laminar element to make the finished product, more specifically a method for upgrading hides that are not of top quality.

### DESCRIPTION OF THE STATE OF THE ART

It should be noted that throughout this description the term "product" is preferably used to indicate a piece of imitation leather or upgraded leather constituted by a generally laminar supporting element, the visible surface of which is subjected to a treatment intended to define the aesthetic characteristics of the product.

As is known, leather is widely used in many sectors such as, for example, the automotive sector and the sectors of furniture, clothing, footwear. Among the various types of leather, the noblest and most expensive part of leather, called pure-grain or full-grain leather, is particularly appreciated, owing to its softness and pleasant feel to the touch as well as to its aesthetic characteristics.

To manufacture also less expensive products having, however, special characteristics and/or characteristics comparable to those of full-grain leather, the known art has proposed laminar textile and synthetic products, even constituted by agglomerates of microfibres, which imitate the aesthetic aspect of natural leather, reduce production costs and improve some physical and mechanical characteristics.

Some manufacturing processes employed to make these products substantially consist in the application, on a laminar support or on low quality hides, of a film of synthetic material obtained by drying one or more layers of polyurethane, even coloured if required.

In a process of known type, the hide, which constitutes the supporting element, is treated in a first part of an apposite system through the application of one or more layers of a synthetic material typically consisting of polyurethane. These layers are obtained through the application of said synthetic material in the fluid or liquid state using, for example, spraying booths or roller coating machines, followed by a partial drying step which serves to partially consolidate (polymerize) the material. The drying step is typically carried out by making the assembly slide in heated tunnels.

The hide with the partially dried layer of synthetic material is then trimmed and successively subjected to a second step, consisting of a printing operation performed to impress the desired grain or pattern on the layer of synthetic material and define the aesthetic characteristics of the leather.

According to a known technique, the printing step is carried out using embossed paper which is pressed, preferably by means of rollers, against the layer of synthetic material of the hide.

According to said known technique, embossed paper is used for this purpose, said embossed paper being constituted by a paper film whose external surface, or embossed surface, is suited to be placed in contact with the layer of synthetic material and reproduces the desired surface characteristics corresponding to the desired surface aesthetic characteristics to be obtained for the hide being processed.

A layer of a protective substance, which is successively transferred on the synthetic material of the hide during the printing operation, is preferably applied to the embossed surface.

During the printing operation, the embossed paper is preferably pressed against the hide in such a way as to place the protective substance of the embossed paper in contact with the layer of synthetic material present on the upper surface of the hide. Preferably, the pressing operation is carried out by conveying the hide with the synthetic layer and the embossed paper with the protective layer between a pair of opposite heated cylinders which act in such a way as to press them against each other with a given pressure and at a given temperature.

During this coupling step, thanks to the residual moisture of the synthetic material and to the presence of the film of protective substance of the embossed paper, the morphological characteristics impressed on the embossed surface of the embossed paper are reproduced on the synthetic layer.

During the coupling operation, the synthetic layer undergoes a further polymerization process, due to the effect of the heated cylinders, towards complete consolidation.

In a successive step, the embossed paper is separated and advantageously recovered to be successively reused, if necessary after cleaning.

However, the known technique has some limitations and drawbacks.

A first drawback is constituted by the fact that during the step in which the embossed paper is pressed against the synthetic layer of the hide, the embossed paper itself is subjected to an undesired deforming action that modifies the morphological characteristics originally impressed on it, consequently modifying the final effect desired for the synthetic layer of the hide.

Another drawback of said technique lies in that the step of pressing the embossed paper against the synthetic layer of the hide deteriorates the morphological characteristics originally impressed on the embossed surface, limiting or even preventing a successive use of the same for successive processing cycles.

This results in an increase in the time needed to provide the system with new embossed paper as well as in a deterioration of the desired final effect to be transferred onto the synthetic layer of the hide. Furthermore, this limits production speed and consequently increases production costs.

The object of the present invention is to overcome said drawbacks.

In particular, it is a first object of the invention to provide an embossed laminar element which is suited to be used for treating a product so as to define its surface characteristics and makes it possible to obtain a final effect that is as close as possible to the desired effect.

It is another object to provide an embossed laminar element which is suited to be used for treating a product so as to define its surface characteristics and can be reused while maintaining the final effect as close as possible to the desired effect for the highest possible number of cycles before being replaced.

It is a further object to provide an embossed laminar element which is suited to be used for treating a product so as to define its surface characteristics and makes it possible to reduce production times and/or costs compared to the known techniques.

### SUMMARY OF THE PRESENT INVENTION

The present invention is based on the general consideration that it is possible to obtain a final product with a surface treatment by using an embossed laminar element comprising a material with elastic properties.

According to a first aspect of the present invention, therefore, the same concerns an embossed laminar element suited to be used for treatments designed to finish a surface of a product, in particular a surface of a hide, said laminar element comprising a supporting layer comprising a first embossed surface that reproduces the surface characteristics corresponding to the surface characteristics desired for said surface to be finished, and a second surface opposite said first embossed surface, wherein the embossed laminar element comprises a material with elastic properties associated with said second surface of said supporting layer.

In a preferred embodiment, the second surface of the supporting layer comprises projections and cavities, and the material with elastic properties fills at least said cavities.

Preferably, the material with elastic properties defines a layer on the second surface of the supporting layer.

More preferably, the material with elastic properties defines a plane or substantially plane surface towards the outside of the laminar element.

In a preferred embodiment, the material with elastic properties comprises an elastically yielding material.

Preferably, the material with elastic properties comprises a resilient material. According to a preferred embodiment, the material with elastic properties comprises a mixture obtained from a prepolymer and a cross-linking agent. Preferably, the prepolymer comprises a polyether and the cross-linking agent comprises an amine.

According to a further preferred embodiment, the prepolymer comprises a polyurethane prepolymer and the cross-linking agent comprises an amine.

Even more preferably, according to a further preferred embodiment, the mixture comprises an aromatic polyurethane prepolymer and an amine.

In a preferred embodiment, the amine (cross-linking agent) comprises a 2,2'-dimethylene-4-4'-methylenebis(cyclohexylamine) or C15 H30 N2.

In a preferred embodiment, the supporting layer comprises a paper layer. Preferably, the supporting layer comprises a layer of release paper having said first embossed surface and said second surface.

According to a preferred embodiment, at least one between the first embossed surface and the second surface of the release paper layer comprises a non-stick material.

According to another aspect of the present invention, the same concerns a method for making a product comprising a laminar support and an upgrading layer, said method using an embossed laminar element of the type described above, said method comprising the following operations:
- applying at least one layer of a first substance to said first embossed surface of said embossed laminar element;
- applying at least one layer of a second substance to the surface of said laminar support to be finished;
- treating said at least one layer of said second substance in such a way that said second substance has an absolute moisture value included between 12% and 25%;
- moving said embossed laminar element near said laminar support in such a way as to place said first substance in contact with said second substance;
- exerting a pressure on said embossed laminar element and/or on said laminar support in such a way as to press said first substance against said second substance;
- consolidating the union between said first substance and said second substance;
- removing said embossed laminar element from said at least one previously consolidated layer of said first substance.

Preferably, the absolute moisture value is included between 15% and 23%, more preferably included between 17% and 22%, and even more preferably equal to 18%.

Preferably, the moisture value is measured using the "AQUA-PICCOLO" moisture meter produced by the German company KPM (K.P. Mundinger GmbH).

In a preferred embodiment, the operation of treating said at least one layer of said second substance in such a way as to obtain said absolute moisture value for the second substance is carried out by heating the second substance.

In a preferred embodiment, the operation of treating the layer of second substance in such a way as to obtain said absolute moisture value for the second substance comprises also a step in which the absolute moisture value of the second substance is measured or assessed.

Preferably, said pressure has a value included between 30 atm and 90 atm, more preferably a value included between 40 atm and 60 atm, more preferably a value included between 45 atm and 55 atm, and even more preferably a value equal to 50 atm.

In a preferred embodiment, the value of said pressure has a trend that is substantially constant over time.

In another preferred embodiment, the pressure has a value whose trend is variable over time.

Preferably, the consolidation step is carried out by heating the first substance and the second substance to a given temperature.

Preferably, said temperature has a value included between 120 °C and 190 °C, more preferably a value included between 150 °C and 170 °C, and even more preferably a value equal to 160 °C.

In a preferred embodiment, the temperature value has a trend that is substantially constant over time.

In another preferred embodiment, the temperature value has a trend that is variable over time.

In a preferred embodiment, the coupling, pressing and consolidation operations are carried out at the same time.

In another preferred embodiment, the pressing and consolidation operations are carried out after the coupling operation.

Preferably, the method comprises a further consolidation step after the coupling, pressing and consolidation operations.

The further consolidation step is conveniently obtained through heating.

In preferred embodiments, the substances are applied through spraying and/or deposition.

Preferably, the first substance comprises a polyurethane resin.

Preferably, the second substance comprises a polyurethane resin.

In preferred embodiments, the laminar support comprises a hide and/or a piece of natural fabric and/or of synthetic fabric and/or of mixed fabric.

In a preferred embodiment, the coupling operation is carried out through conveyor means suited to place the layer of said first substance in contact with the layer of said second substance.

Conveniently, the method comprises an operation of at least partial consolidation of the first substance after application onto the embossed surface and before the consolidation operation.

Preferably, the layer of said first substance has a thickness included between 0.02 mm and 0.07 mm, more preferably included between 0.03 mm and 0.06 mm and even more preferably equal to 0.04 mm.

Preferably, the layer of said second substance has a thickness included between 0.2 mm and 0.7mm, more preferably included between 0.3mm and 0.55mm and even more preferably equal to 0.4 mm.

According to another aspect of the present invention, the same concerns the making of a product comprising a laminar support and an upgrading layer through the method described above.

### BRIEF DESCRIPTION OF THE DRAWINGS

Further advantages, objects and characteristics, as well as further embodiments of the present invention, are defined in the claims and will be illustrated in the following description, with reference to the enclosed drawings; in the drawings, corresponding or equivalent characteristics and/or component parts of the present invention are identified by the same reference numbers. In particular, in the drawings:
- Figure 1 shows an axonometric view of an embossed laminar element according to a preferred embodiment of the invention;
- Figure 2 shows a partial sectional view of the embossed laminar element shown in Figure 1;
- Figure 3 shows a schematic view of the various operations included in a method that is the subject of the invention within a system using the embossed laminar element of Figure 1;
- Figures 3A, 3B, 3C, 3D show enlarged details of Figure 3;
- Figure 4 shows another enlarged detail of Figure 3;
- Figure 5 shows a first variant embodiment of the system of Figure 3;
- Figure 6 shows another variant embodiment of the system of Figure 3 in a first operating position;
- Figure 7 shows the system of Figure 6 in a second operating position;
- Figure 8 shows a variant embodiment of the embossed laminar element of Figure 1;
- Figure 9 shows a partial sectional view of the embossed laminar element shown in Figure 8;
- Figure 10 shows another variant embodiment of the embossed laminar element of Figure 1;
- Figure 11 shows a partial sectional view of the embossed laminar element of Figure 10.

### DETAILED DESCRIPTION OF THE PRESENT INVENTION

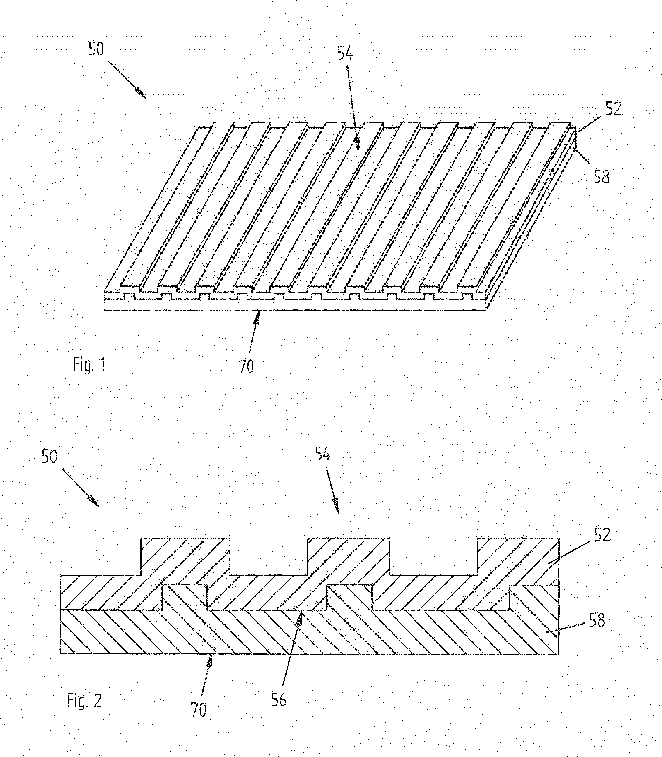

Figure 1 shows an embossed laminar element 50 according to a preferred embodiment of the invention.

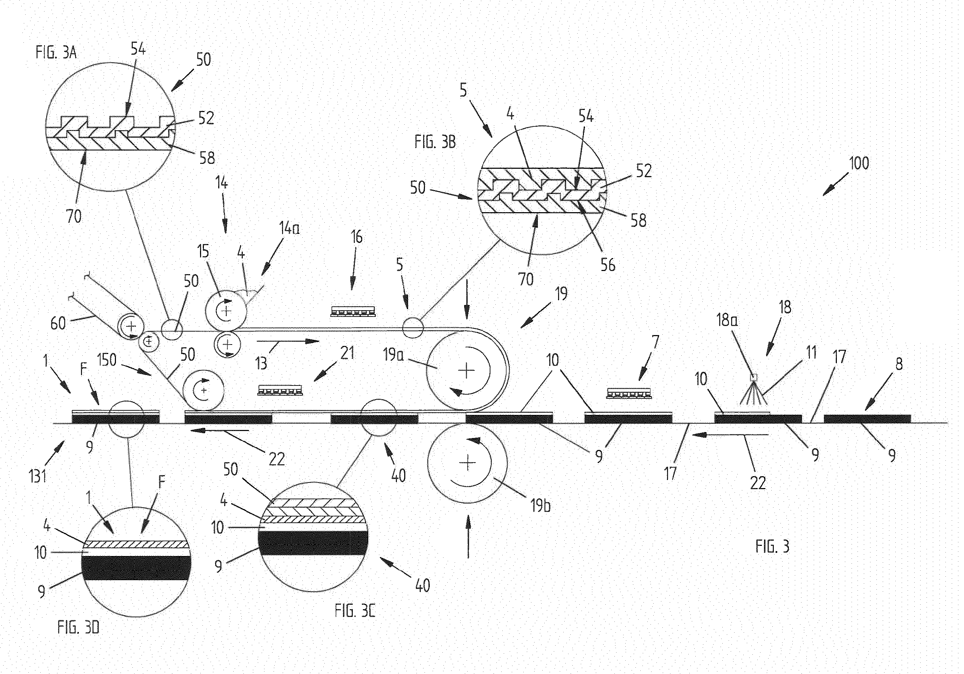

Figures 3, 5, 6 and 7 show three systems 100, 200, 300 using the embossed laminar element 50 according to the invention for making a product 1 comprising a laminar support 9 and an upgrading layer F, as is better described below.

In Figure 1 the embossed laminar element 50 is shown substantially in the shape of a square piece.

However, the embossed laminar element 50 of the present invention can have any other desired shape, for example the shape of a tape closed as a ring (as shown, for example, in the above mentioned systems of Figures 3, 5, 6 and 7) and/or be wound on a reel (possibly ready to be used in another type of system or cut to measure according to the application).

It should also be observed that, in order to facilitate the description, the thicknesses and/or sizes of the various layers shown in the figures are merely indicative, and so are the proportions of the same with respect to one another.

In particular, the enlargements of Figures 2, 3A, 3B and 4 have been exaggerated purposely, in order to make them clearer to understand.

As explained, the embossed laminar element 50 according to the present invention is preferably suited to be used in the finishing treatments for a surface of a product, in particular a surface of a laminar support 9 constituted by a hide, as better described below.

The finishing treatment produces a particular and desired surface characteristic on an initial product, for example it finishes a low-quality hide.

The embossed laminar element 50 according to the invention, better visible in Figure 2, comprises a supporting layer 52 comprising a first embossed surface 54 reproducing the surface characteristics corresponding to the surface characteristics desired for the surface to be finished.

The supporting layer 52 of the embossed laminar element 50 comprises also a second surface 56 opposite the first embossed surface 54.

In the embodiment illustrated herein, the embossed surface 54 is shown by way of example as a series of ribs, represented with exaggerated dimensions compared to their actual dimensions for the sake of simplicity. In practical application, the embossed surface will have a particular configuration suited to obtain the desired surface effect, for example a leather-like effect for bags, jackets, belts etc.

In addition, the configuration of the second surface 56 preferably reflects the configuration of the first embossed surface 54.

In general, the first embossed surface is defined by a surface which is not smooth and comprises projections and cavities, and the second surface preferably reflects the configuration of the first embossed surface and is provided with projections and cavities, too.

In a preferred embodiment, the supporting layer 52 comprises a paper layer. Preferably, the supporting layer comprises a layer of release paper having the first embossed surface and the second surface.

In preferred embodiments of the invention, the first embossed surface and/or the second surface of the release paper layer comprise/s a layer of non-stick material. In variant embodiments, the supporting layer may comprise other materials suited to serve the desired supporting function.

According to a first aspect of the present invention, the embossed laminar element 50 comprises a material with elastic properties 58 associated with the second surface 56 of the supporting layer 52.

More preferably, the material 58 with elastic properties fills all the cavities of the second surface 56 of the supporting layer 52 and defines a layer that covers the second surface 56 itself, as shown in Figure 2.

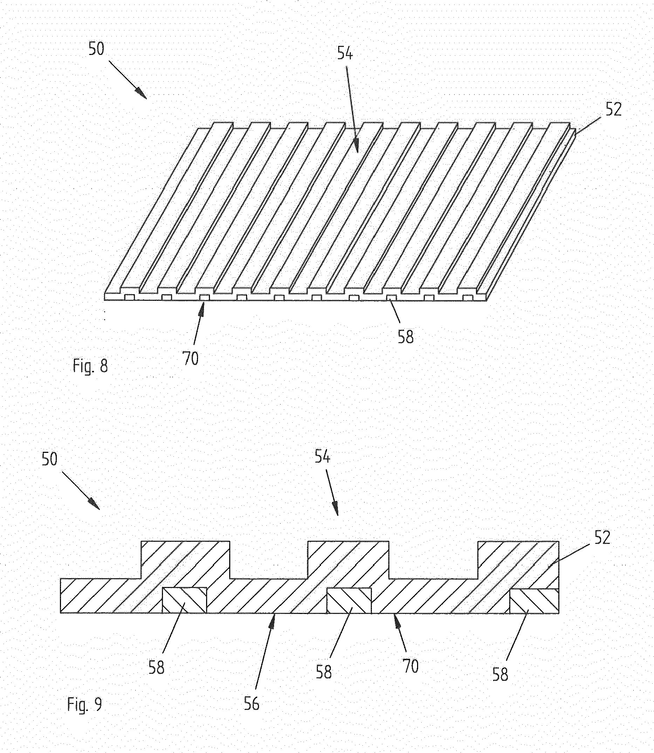

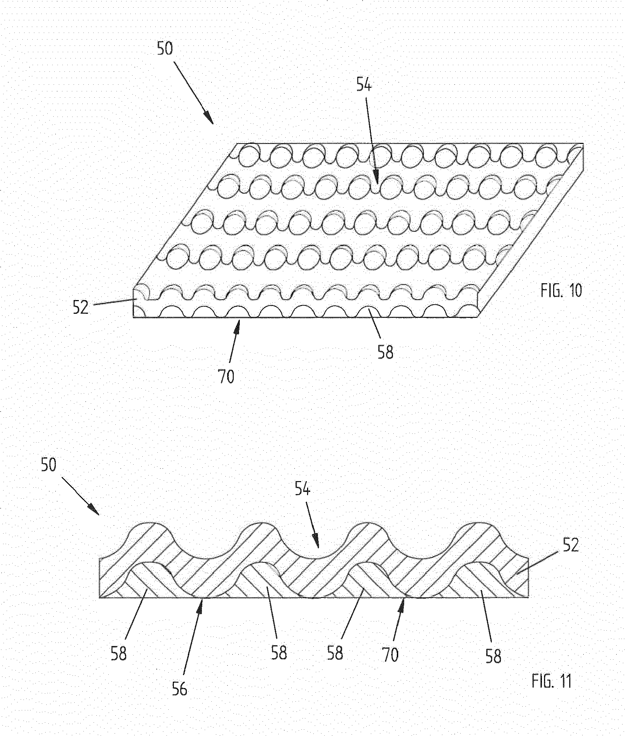

In variant embodiments, as shown, for example, with reference to the first variant embodiment of Figures 8 and 9 or to the second variant embodiment of Figures 10 and 11, the material 58 with elastic properties fills only the cavities of the second surface 56 of the supporting layer 52.

The second variant embodiment shown in Figures 10 and 11 differs from the first variant embodiment shown in Figures 8 and 9 only for the different configuration of the embossed laminar element 50, which will produce a corresponding finish on the surface of the product to be obtained.

According to an advantageous aspect of the invention, the material with elastic properties 58 is associated with the second surface 56 of the supporting layer 52 in such a way as to define a plane or substantially plane surface 70, towards the outside of the laminar element 50.

This characteristic favours the use of the embossed laminar element 50, as better described below.

Preferably, the layer 58 with elastic properties comprises an elastically yielding material.

Preferably, the layer with elastic properties comprises a resilient material.

The layer 58 with elastic properties is preferably applied to the second surface 56 of the supporting layer 52.

In a preferred embodiment said application is carried out through a spreading process.

In variant embodiments equivalent application methods may be adopted such as, for example, spraying.

Advantageously, the material 58 with elastic properties improves the mechanical resistance characteristics of the supporting layer 52 with the corresponding embossed surface 54, as is better explained below.

In a preferred embodiment, the production of a laminar element 50 according to the invention comprises the following steps:
- providing a supporting layer 52 comprising a layer of embossed paper, preferably a layer of embossed release paper, more preferably a layer of embossed release paper provided with a non-stick material;
- applying a mixture obtained from a prepolymer and a cross-linking agent to the second surface 56 of the supporting layer 52, said mixture constituting said material 58 with elastic properties.

According to a preferred embodiment, the prepolymer comprises a polyether and the cross-linking agent comprises an amine.

According to a further preferred embodiment, the prepolymer comprises a polyurethane prepolymer and the cross-linking agent comprises an amine.

Even more preferably, according to a further preferred embodiment, the mixture comprises an aromatic polyurethane prepolymer and an amine.

According to a preferred embodiment, the amine (cross-linking agent) comprises a 2,2'-dimethylene-4-4'-methylenebis(cyclohexylamine) or C15 H30 N2.

In a particular embodiment, the laminar element 50 of the invention comprises the following steps:
- providing a supporting layer 52 comprising a layer of a material distributed by ARCONVERT® under the name "Casting release paper" with code EV 130 TPD R61;
- spreading a mixture comprising a first material distributed by STAHL under the name PERMUTHANE® with code EX-HS-13-613 and a second material distributed by STAHL under the name PERMUTHANE® with code XR-22-421 on the second surface 56 of the supporting layer 52 to obtain said layer 58 with elastic properties.

More specifically, the mixture preferably comprises 2.85 parts of PERMUTHANE® XR-22-421 per 100 parts of PERMUTHANE® EXHS-13-613.

According to a further preferred embodiment, the mixture comprises 100 parts of PERMUTHANE EX-HS-13-613 and a percentage of the 2.85 parts of PERMUTHANE XR-22-421 included between 94% and 99%.

The layer 58 created with said mixture preferably has a thickness exceeding 0.1 mm, more preferably a thickness exceeding 0.15 mm.

More generally, the thickness of the material 58 with elastic properties is at least equal to the depth of the cavities of the second surface 56 of the supporting layer 52 in order to cover them, as shown for example in Figures 9 and 11.

A first preferred embodiment of the method suited to make a product 1 comprising a laminar support 9 and an upgrading layer F, and using an embossed laminar element 50 of the type illustrated above is described with reference to the system 100 of Figure 3.

The method substantially includes the application of at least one substantially uniform layer 10 of a synthetic substance 11 to a surface 8 of the laminar support 9.

Preferably, in the final product 1 the layer 10 reproduces the desired surface characteristics corresponding to the surface characteristics of the embossed surface 54.

In the example of implementation of the method proposed herein, as schematically shown in Figure 3, the embossed laminar element 50 with the embossed surface 54 (Figure 3A) is closed as a ring and is moved forward along a rectilinear direction 13.

On the embossed laminar element 50 there are first application means 14 suited to apply a first substance 4, or protective substance, as clearly shown below in the description.

Said first application means 14 comprise, in the case at hand, a rotary application cylinder 15, fed by a first tank 14a containing said protective substance. The protective substance 4 is preferably in the liquid form or in any case its viscosity is such as to allow the application of a homogeneous layer to the embossed laminar element 50.

In other embodiments, said first application means 14 may comprise different systems, for example doctor blade or spray systems or equivalent systems, even of the type known per se.

In the case at hand, the protective substance 4 preferably comprises a polyurethane substance.

The protective substance 4 is preferably transparent.

In other embodiments, the protective substance can be constituted by suitable emulsions.

Successively, the layer of protective substance 4 is preferably heated through heating means 16 arranged downstream of the first application means 14. During said step, the protective substance 4 is subjected to an at least partial consolidation/polymerization process.

The laminar element 5 leaving the heating means 16 is constituted by the embossed laminar element 50 and the protective substance 4, as shown in detail in Figure 3B. The embossed laminar element 50 has therefore its embossed surface 54 covered by a film of protective substance 4.

The thickness of the protective substance 4 is preferably included between 0.02 mm and 0.07 mm, more preferably between 0.03 mm and 0.06 mm and even more preferably it is equal to 0.04 mm.

In variant embodiments, the laminar element 5 comprising the embossed laminar element 50 and the protective substance 4 can be made in advance and separately, and be positioned directly in the system 100, for example advantageously in the form of a reel.

In the case at hand, the laminar support 9 is constituted by a hide, even of low quality. The hide 9 is arranged on a conveyor belt 17 which moves it forward along a rectilinear direction 22 towards second application means 18 suited to apply a second substance 11 which in the final product 1 will constitute the layer 10 of said synthetic substance 11.

In other embodiments, the laminar support can be of a different type, for example the crust deriving from leather processing, and in general constituted by supporting elements to be upgraded, which at the end of the treatment will have special characteristics and/or characteristics which can even be compared to those of full-grain leather.

The second application means 18 preferably comprise a plurality of spray nozzles 18a fed by a special tank, not illustrated herein, which contains the synthetic substance 11. In other embodiments, said second application means 18 may comprise a nebulizer suited to direct the product onto the surface 8 to be treated, or a brush or systems consisting of a doctor blade or a cylinder or equivalent systems, also of the type known per se and therefore not described here below. According to a preferred embodiment of the method, the synthetic substance 11 comprises a polyurethane resin.

In other embodiments, the synthetic substance may be of a different type, for example an acrylic resin or a butadiene resin.

Furthermore, preferably, the synthetic substance is of a coloured type, for example comprising colour pigments. The colour is preferably selected according to the aesthetic appearance desired for the final product 1.

The synthetic substance 11 applied to the upper visible surface 8 of the hide 9 makes it possible to upgrade the same surface, which in itself appears as being of a lower quality compared to high quality leather, such as full-grain leather.

The synthetic substance 11 is preferably in the liquid form or in any case its viscosity is such as to allow a homogeneous layer to be applied to the upper surface 8 of the hide 9.

The thickness of the synthetic substance 11 has preferably a value included between 0.2mm and 0.7mm, more preferably a value included between 0.3mm and 0.55mm and even more preferably a value equal to 0.4mm.

At the moment of its application through the second application means 18, the resin 11 has an appropriate viscosity value. The value of said viscosity is preferably included between 3 and 8 minutes, measured with a Ford Cup viscometer as measuring instrument.

Furthermore, at the moment of its application through the second application means 18, said resin 11 has a high moisture value, substantially around 70÷80%. The hide 9 with the layer 10 of resin 11 is successively subjected to a thermal treatment by conveying it towards suitable heat treatment means 7.

During the thermal treatment, which is substantially a heating treatment, the resin 11 is subjected to consolidation/polymerization and its characteristic parameters are gradually modified.

According to the invention, the thermal treatment is carried out in such a way that the resin 11 is not completely polymerized, that is, in such a way that the same does not become completely dry.

Preferably, the thermal treatment is carried out in such a way that at the end of the treatment the absolute moisture value of the resin 11 is preferably included between 12% and 25%, preferably included between 15% and 23%, more preferably included between 17% and 22%, and even more preferably equal to 18%.

The expression "absolute moisture" is used to indicate the water content of the material, expressed as a percentage of the total weight of the material itself. Preferably, the desired absolute moisture is obtained by controlling the duration of the heating treatment to which the resin 11 is subjected.

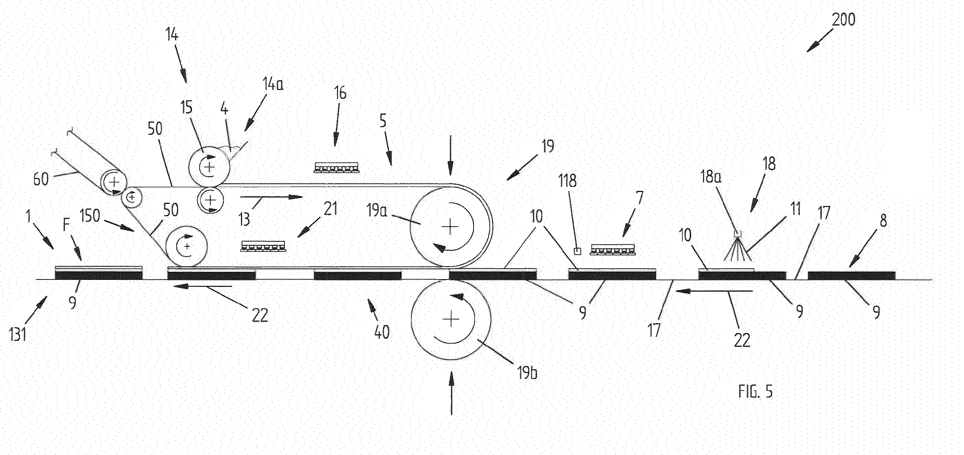

In other embodiments, the desired absolute moisture can be controlled through suitable control means 118 associated with the heating means 7, as schematically shown in the variant embodiment of the system 200 illustrated in Figure 5. The system 200 of Figure 5 differs from the system 100 of Figure 1 only due to the presence of said control means 118. Preferably, the control means 118 comprise a moisture meter for solid materials, suited to measure the absolute moisture value of the resin 11 downstream of the heating means 7.

In particular, the moisture meter used to measure the absolute moisture value of the resin 11 is constituted by the "AQUA-PICCOLO" moisture meter produced by the German company KPM (K.P. Mundinger GmbH).

In other embodiments, the desired absolute moisture value can be obtained by controlling other significant parameters, for example by controlling the duration and the temperature of the treatment to which the resin 11 is subjected, or even through experimental tests intended to empirically determine the time and temperature parameters of the treatment to which the resin 11 is subjected.

The method then comprises a coupling step during which the laminar element 5 constituted by the embossed laminar element 50 with the protective substance 4 is moved near the support 9 with the layer 10 of resin 11. The coupling between the laminar element 5 and the support 9 with the layer 10 of resin 11 is obtained through a coupling unit, indicated as a whole by number 19, arranged downstream of the heating means 16 and of the heat treatment means 7. In the case at hand, the coupling unit 19 comprises a pair of cylinders 19a, 19b operating in such a way as to place the protective substance 4 of the laminar element 5 in contact with the layer 10 of resin 11 present on the upper surface 8 of the hide 9.

The pair of cylinders 19a, 19b preferably act in such a way as to press the laminar element 5 against the layer of resin 11 present on the upper surface 8 of the hide 9 with a pressure P and at a temperature T.

For this purpose, the pair of cylinders 19a, 19b can be positioned at a predetermined mutual distance to exert the desired pressure P and is provided with heating means to heat the pressed assembly to the desired temperature T.

In a preferred embodiment, the heating means comprise heating means suited to heat the external surface of one or both of the cylinders 19a, 19b.

In other embodiments, the heating means can be made in a different way, for example by providing electrical resistances in proximity to the coupling area or positioning the cylinders inside an oven.

Furthermore, the advance speed V of the conveyor belt 17 that moves the assembly forward along the rectilinear direction 22 between the two cylinders 19a, 19a and the rotation speed of the same are conveniently controlled to favour the correct mutual coupling of the protective substance 4 with the layer 10 of resin 11.

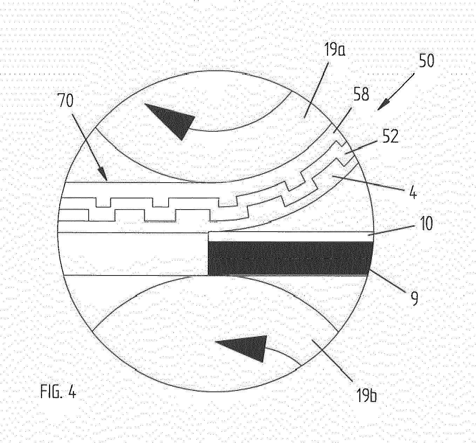

According to an advantageous aspect of the present invention, when the pair of cylinders 19a, 19b act pressing the laminar element 5 against the layer of resin 11 present on the upper surface 8 of the hide 9, as shown in the detail of Figure 4, the material 58 with elastic properties absorbs the stress exerted by the cylinder 19a onto the embossed laminar element 50, thus protecting the supporting layer 52 and the respective embossed surface 54.

Preferably, said exerted pressure P has a value included between 30 atm and 90 atm, more preferably a value included between 40 atm and 60 atm, more preferably a value included between 45 atm and 55 atm, and even more preferably a value equal to 50 atm.

Preferably, said temperature T has a value included between 120 °C and 190 °C, more preferably a value included between 150 °C and 170 °C, and even more preferably a value equal to 160 °C.

Preferably, the value of the advance speed V of the belt 17 is included between 5 m/minute and 10 m/minute.

In a preferred embodiment, for example, the belt 17 advances in the 10m long oven at a speed of 8 m/minute with the oven at a temperature of 120°C.

In another preferred embodiment, for example, the belt performs two runs inside a 10m long oven at a speed of 10 m/minute with the oven at a temperature of 130°C.

According to the invention, during said coupling step, thanks to the absolute moisture of the resin 11 and to the presence of the film of protective substance 4, the morphological characteristics impressed on the embossed surface 54 are reproduced on the layer of resin 11 itself. The pattern defined by the embossed surface 54 is actually impressed in negative on the layer of resin 11.

Still advantageously, the material 58 with elastic properties allows the pressure of the cylinder 19a to be transferred on the supporting layer 52, distributing said pressure homogeneously so as to improve the quality of the transfer of the morphological characteristics impressed on the embossed surface 54.

Said homogeneous distribution of the pressure is advantageously favoured by the flatness of the surface 70 of the embossed laminar element 50 that comes in direct contact with the external surface of the upper cylinder 19a, as shown in Figure 4.

The absolute moisture of the resin 11 ensures such a consistency that it is possible to reproduce the pattern of the laminar embossed element 50 on the resin 11 itself. At the same time, the film of protective substance 4 prevents the resin 11 from sticking to the embossed surface 54 of the embossed laminar element 50. Furthermore, the film of protective substance 4 is transferred on the layer 10 of resin 11. At the exit of the coupling unit 19, therefore, the result will be a semi-finished product 40, shown in detail in Figure 3C, comprising the hide 9, the layer 10 of resin 11 with the desired pattern impressed thereon, the layer of protective substance 4 and the embossed laminar element 50.

During the coupling operation, the layer of resin 11 undergoes a further polymerization process, due to the heating step, towards complete consolidation. Advantageously and preferably, the semi-finished product 40 undergoes a further operation intended to favour complete polymerization and/or drying and to further consolidate the layer 10 of resin 11 on the supporting element 9, in addition to the film of protective substance 4.

This operation preferably comprises the use of further heating means 21, for example an oven.

In variant embodiments, however, said further heating means may be absent.

At the exit of the further heating means 21, therefore, the result will be the product consisting of the supporting element 9 (hide) provided with the upgrading film F constituted by the layer 10 of resin 11 and by the protective substance 4, and finally the embossed laminar element 50.

Downstream of the heating means 21 and in proximity to the unloading area 131 there is a separation unit 150 suited to allow the embossed laminar element 50 to be separated from the underlying final product 1. The embossed laminar element 50 thus proceeds towards the first application means 14.

Before it passes under the first application means 14, its embossed surface 54 leaving the separation unit 150 is advantageously cleaned by removing the residual protective substance 4 that has not been transferred on and/or has not affected parts of the hide 9. Said cleaning operation is preferably carried out by making the embossed external surface 54 of the embossed laminar element 50 adhere to an adhesive tape 60 that removes the residual substance. Advantageously, according to the present invention, the embossed laminar element 50, thanks to the presence of the material 58 with elastic properties, can be used for a long time in the system 100 before being replaced.

The material 58 with elastic properties, in fact, as explained above, preserves the characteristics of the supporting layer 52 and of the embossed surface 54 to a greater extent, especially during its passage between the cylinders 19a, 19b of the coupling unit 19, extending its operating life.

This makes it possible to reduce the costs associated with the use of the embossed paper and the time/costs required for its replacement.

In variant embodiments, the embossed laminar element 50, instead of being wound as a ring in the system 100, as illustrated herein, may be unwound from a first reel located upstream of the first application means 14, to be successively wound on a second recovery reel at the end of the cycle, for example downstream of the separation unit 150 or after the cleaning operation.

At the exit of the separation unit 150, therefore, the result will be the desired final product 1 consisting of the supporting element 9 (hide) provided with the upgrading film F constituted by the layer 10 of resin 11 and by the protective substance 4.

If necessary, according to the customer's needs, the final product 1 can be subjected to further processing steps intended to obtain the desired opacity and/or brightness and/or pastiness.

In the embodiment described herein, furthermore, the system 100 makes it possible to obtain a continuous processing cycle, with particular benefits in terms of production speed, reduced overall dimensions of the system and thus reduced costs for the production and/or setting up of the system.

In particular, in the system 100 carried out according to the preferred embodiment, the coupling unit 19 which joins the embossed laminar element 50 with the layer of protective substance 4 to the hide 9 with the layer of resin 11 operates in such a way as to carry out the coupling, pressing and thermal treatment steps substantially at the same time and in a continuous way, while the two cylinders 19a, 19b rotate and the conveyor belt 17 moves forward. In addition to the above, as already explained, the control of said parameters of speed V, pressure P and temperature T has a decisive effect on the characteristics desired for the final product 1.

In variant embodiments, however, one or more steps of the method can be carried out at different moments.

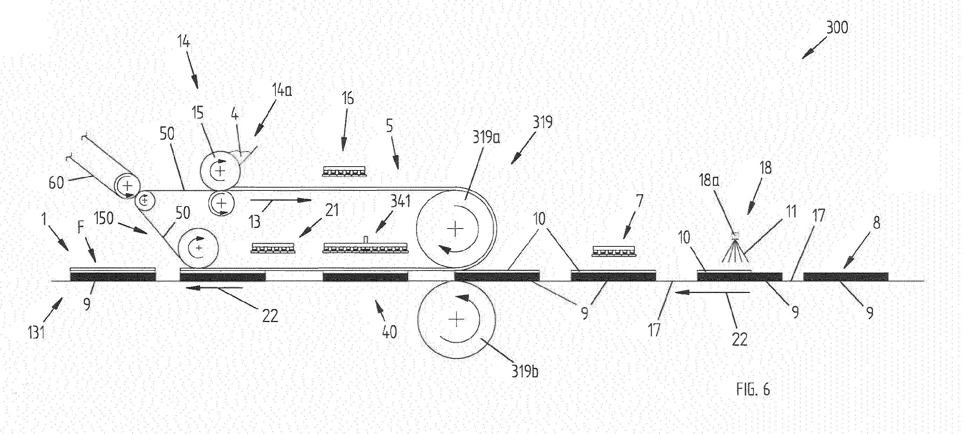

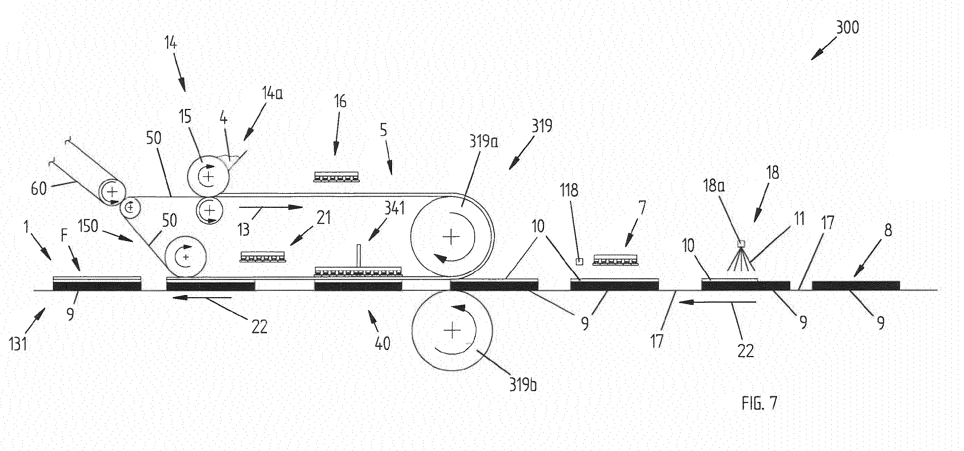

By way of example, and with reference to the variant embodiment of the system 300 illustrated in Figures 6 and 7, the step of resting the laminar element 5 on the hide 9 with the layer 10 of resin 11 takes place before the pressing and thermal treatment steps.

For this purpose, the coupling unit 319 comprises two rotary cylinders 319a, 319b that rest the laminar element 5 on the hide 9 with the layer 10 of resin 11 and a successive pressing and heating unit 341 that acts on the assembly with a given pressure, at a predetermined temperature and for a predetermined lapse of time, according to the configuration shown in Figure 7, in which the pressing and heating unit 314 is in the closed operating position. The pressing and heating unit 341 preferably comprises a heated vertical press. Obviously, in said embodiment, during the pressing and thermal treatment step the conveyor belt 17 will be stopped in order to allow the treatment to be performed by means of the vertical press 341, and then will start moving again with the successive assembly.

It should be noted that in all of the embodiments described above or in any case falling within the scope of the present invention, during the coupling step the pressure and/or temperature values may not be constant or substantially constant but be modified according to appropriate functions that are variable over time, in order to better polymerize and stabilize the substances.

As regards the support 9, it can even be constituted by a natural or synthetic fabric element or by natural leather, even of the full-grain type.

In addition to the above, in a further embodiment, the second application means 18 may comprise also a unit suited to detect the geometrical shape of the surface of the supporting element 9.

This unit, substantially of known type, comprises systems for the acquisition and processing of images which cooperate with a control unit intended to control the activation and deactivation of the second application means 18, thus minimizing the consumption of synthetic substance 11.

It is clear that the arrangement of the various units of the system described above is indicated only by way of example, as the parts and means which perform the various operations can be different and more than one, and can be present in any number inside the system.

For example, the number of the heat treatment means and/or the number of the heating means can vary.

It should also be observed that further devices or machines suited to perform special processing cycles and obtain special effects can be arranged among the various parts of the system.

The above clearly shows that the embossed laminar element and the method proposed allow the set objects to be achieved.

In particular, it is clear that the proposed solution makes it possible to provide a product in which the final effect in terms of surface characteristics is as close as possible to the desired effect.

Even though the invention has been described making reference to the attached drawings, upon implementation changes can be made that shall all be considered protected by the present patent, provided that they fall within the scope of the inventive concept expressed in the following claims.

## Claims

1. Embossed laminar element (50) suited to be used in treatments designed to finish a surface (M) of a product (1), more specifically a surface of a hide, said laminar element (50) comprising a supporting layer (52) comprising a first embossed surface (54), reproducing the surface characteristics corresponding to the surface characteristics desired for said surface to be finished, and a second surface (56) opposite said first embossed surface (54), **characterized in that** it comprises a material with elastic properties (58) associated with said second surface (56) of said supporting layer (52).

2. Laminar element (50) according to claim 1, **characterized in that** said second surface (56) of said supporting layer (52) comprises projections and cavities and said material with elastic properties (58) fills at least said cavities.

3. Laminar element (50) according to claim 1, **characterized in that** said material with elastic properties (58) defines a layer on said second surface (56) of said supporting layer (52).

4. Laminar element (50) according to any of the preceding claims, **characterized in that** said material with elastic properties (58) defines a plane or substantially plane surface (70) towards the outside of said laminar element (50).

5. Laminar element (50) according to any of the preceding claims, **characterized in that** said material with elastic properties (58) comprises an elastically yielding material.

6. Laminar element (50) according to any of the preceding claims, **characterized in that** said supporting layer (52) comprises a paper layer.

7. Laminar element (50) according to any of the preceding claims, **characterized in that** said supporting layer (52) comprises a layer of release paper provided with said first embossed surface (54) and said second surface (56).

8. Laminar element (50) according to claim 7, **characterized in that** at least one between said first embossed surface (54) and said second surface (56) of said layer of release paper comprises a non-stick material.

9. Method for making a product (1) comprising a laminar support (9) and an upgrading layer (F), said method using an embossed laminar element (50) according to any of the preceding claims, **characterized in that** it comprises the following operations:
- applying at least one layer of a first substance (4) to said first embossed surface (54) of said embossed laminar element (50);
- applying at least one layer (10) of a second substance (11) to the surface to be finished (8) of said laminar support (9);
- treating said at least one layer (10) of said second substance (11) in such a way that said second substance (11) has an absolute moisture value included between 12% and 25%;
- moving said embossed laminar element (50) near said laminar support (9) in such a way as to place said first substance (4) in contact with said second substance (11);
- applying a pressure (P) to said embossed laminar element (50) and/or to said laminar support (9) in such a way as to press said first substance (4) against said second substance (11);
- consolidating the union of said first substance (4) and said second substance (11);
- removing said embossed laminar element from said at least one previously consolidated layer of said first substance.

10. Method according to claim 9), **characterized in that** said absolute moisture value is included between 15% and 23%, more preferably included between 17% and 22%, and even more preferably equal to 18%.

11. Method according to claim 9 or 10, **characterized in that** said operation of treating said at least one layer (10) of said second substance (11) in such a way that said second substance (11) has said absolute moisture value is performed by heating said second substance (11).

12. Method according to any of the claims from 9 to 11, **characterized in that** said consolidation step is performed by heating said first substance (4) and said second substance (11) to a given temperature (T).

13. Method according to any of the claims from 9 to 12, **characterized in that** said coupling, pressing and consolidation operations are performed at the same time.

14. Method according to any of the claims from 9 to 12, **characterized in that** said pressing and consolidation operations are performed after said coupling operation.

15. Product (1) comprising a laminar support (9) and an upgrading layer (F), and obtained with the method according to any of the claims from 9 to 14.
